# EUROPEAN PATENT SPECIFICATION

(11) **EP 1 573 078 B1**
(45) Date of publication and mention of the grant of the patent: **19.11.2008**
(21) Application number: 03774996.7
(22) Date of filing: 28.11.2003
(51) Int. Cl.: C01F 7/06, C01F 7/14, C22B 3/44, C22B 43/00

(54) **METHOD FOR REDUCING EMISSIONS**
VERFAHREN ZUR ABGASREDUKTION
PROCEDE DE REDUCTION D'EMISSIONS

(30) Priority: 29.11.2002 AU 2002953024
(43) Date of publication of application: 14.09.2005
(73) Proprietor: ALCOA OF AUSTRALIA LIMITED, Booragoon, W.A. 6154 (AU)
(72) Inventor: DOBBS, Charles Luther, Leechburg, PA 15656 (US); ADAMEK, Eugene Allen, Pittsburgh, PA 16066 (US); IRONS, Richard, Hallshead, Western Australia 6210 (AU); LOCHORE, David John, Floreat, Western Australia 6014 (AU); MCGUINESS, Luke, Willetton, Western Australia 6155 (AU); RYAN, Ken William, Port Lavaca, TX 77979 (US); SIVAKUMAR, Thinnalur Jayaraman, Victoria, TX 77904 (US); TICEHURST, Philip Lloyd, Pinjarra, Western Australia 6208 (AU); WILLIAMS, Fred S., Victoria, TX 77904 (US)
(74) Representative: Wise, Stephen James
(86) International application number: PCT/AU2003/001593
(87) International publication number: WO 2004/050929

(56) References cited:
- WO-A1-99/15283
- GB-A- 2 329 383
- US-A- 3 749 761
- US-A- 4 333 913
- US-A- 4 844 815
- US-B1- 6 352 675
- FRANCIS T ET AL: "Cyanex 471X as extractant for the recovery of Hg(II) from industrial wastes" HYDROMETALLURGY, ELSEVIER SCIENTIFIC PUBLISHING CY. AMSTERDAM, NL, vol. 57, no. 3, 1 October 2000 (2000-10-01), pages 263-268, XP004215335 ISSN: 0304-386X

## Description

### Field of the Invention

The present invention relates to a method for control of mercury emissions from caustic liquor process streams. The method of the present invention has particular application in Bayer process alumina refining.

### Background Art

Many alumina refineries show significant emissions of mercury to atmosphere from the digestion and evaporation unit processes. Significant emissions of mercury to air may also in some instances be found emanating from the calcination stacks, and in stacks from oxalate combustion. Such emissions result from mercury incorporated in the feedstock to the calciners or oxalate furnace. Treating mercury emissions from the stacks, particularly from the calcination stacks, is difficult and very costly due to the high volumes of gas emitted and the low concentration of mercury in these gas streams.

There is a need to provide a method of controlling mercury emissions that provides a useful alternative to those already known in the industry. It is an object of this invention to provide a method that controls mercury emissions to atmosphere.

The preceding discussion of the background to the invention is intended to facilitate an understanding of the present invention. However, it should be appreciated that the discussion is not an acknowledgement or admission that any of the material referred to was part of the common general knowledge in Australia as at the priority date of the application.

Throughout the specification, unless the context requires otherwise, the word "alumina" will be understood to encompass fully dehydrated alumina, fully hydrated alumina, partially hydrated alumina or a mixture of these forms. Further, the term "aluminium hydroxide" will be understood to encompass fully hydrated alumina, partially hydrated alumina or a mixture of these forms.

Further, throughout the specification, unless the context requires otherwise, the word "comprise" or variations such as "comprises" or "comprising", will be understood to imply the inclusion of a stated integer or group of integers but not the exclusion of any other integer or group of integers.

### Disclosure of the Invention

In accordance with the present invention, there is provided a method for controlling mercury emissions from mercury containing caustic process solutions, according to claim 1.

The method of the present invention confers the advantage of the ability to control at which point in the process mercury is emitted. For example, the method of the present invention may be used to reduce mercury emissions from calcination stacks by reducing the amount of mercury precipitated with aluminium hydroxide.

It will be appreciated that the first desired location and the second desired location may be the same.

In one form of the invention, caustic process solutions are provided in the form of Bayer process solutions.

Preferably, the mercury complexing substance is provided in the form of sulfide ions.

Preferably, the step of adding the sulfide ions to the process stream further comprises the step of:
adding sufficient sulfide ions such that the process stream contains free sulfide.

In one form of the invention, the sulfide ions are provided in the form of sodium hydrogen sulfide.

The sodium hydrogen sulfide is preferably added as an aqueous solution of a concentration between about 10 - 90% ^{w}/_{w}. More preferably, sodium hydrogen sulfide is added as an aqueous solution of a concentration between about 20 - 60% ^{w}/_{w}. In a specific form of the invention, sodium hydrogen sulfide is added as an aqueous solution of a concentration of about 40% ^{w}/_{w}.

In an alternate form of the invention, the sulfide ions are provided in the form of any sulfide salt soluble under caustic conditions including sodium sulfide. In another form of the invention, the sulfide is provided in the form of an organosulfide compound.

In one form of the invention, the step of permitting or causing the depletion of the mercury complexing substance is performed by oxidation of the mercury complexing substance.

Where the mercury complexing substance is sulfide, the step of permitting or causing the depletion of the mercury complexing substance by oxidation of the mercury complexing substance may comprise the step of:
adding an oxidant to the process to oxidise sulfide to sulfate.

Without wishing to limit the scope of the invention, appropriate oxidants may include air, oxygen, ozone, hydrogen peroxide, hypochlorite anion or permanganate anion.

The method of the present invention confers the ability to control sulfide levels in the Bayer liquor so the oxidation of the sulfide in the Bayer liquor causes the sulfide to be depleted prior to the step in the process where mercury removal is desired.

The method of the present invention may further comprise the step of:
re-digestion of at least a portion of the residue at a higher temperature.

In a first embodiment of the invention where the Bayer process includes the steps:
digestion of bauxite with caustic solution;
liquid-solid separation to provide a residue and a liquor;
precipitation of aluminium hydroxide from the liquor; and
calcination of the aluminium hydroxide to provide alumina,
the mercury complexing substance is added prior to the step of precipitation of aluminium hydroxide from the liquor.

Preferably, the mercury complexing substance is added after the step of liquid-solid separation and before the step of precipitation of aluminium hydroxide from the liquor.

Preferably, the method comprises the further step of:
providing free sulfide in the Bayer liquor after the step of precipitation of aluminium hydroxide.

Preferably, the method comprises the further step of:
maintaining sufficient sulfide concentration before the step of precipitation of aluminium hydroxide such that there is free sulfide in the Bayer liquor after aluminium hydroxide precipitation.

Preferably, the method more specifically comprises the step of:
maintaining the free sulfide concentration in the Bayer liquor between about 10 - 50 ppm before aluminium hydroxide precipitation.

It will be appreciated that the dosing of sulfide to liquor may be influenced, among other factors, by the extent of exposure to air in the precipitation process and the temperature of the method.

In one form of the invention, the method comprises the additional step of:
adding an oxidant to the process.

Where the method comprises the step of adding oxidant to the process, the oxidant may in one form of the invention, be added to the liquor from the step of precipitation of aluminium hydroxide from the liquor

Where the method comprises the step of adding oxidant to the process, the oxidant may in one form of the invention, be added to the process before the step of digestion of bauxite with caustic solution.

In one form of the invention, the method comprises the further step of:
removing the mercury from the Bayer process stream by volatilisation in non-condensable gases from evaporation and/or digestion.

The mercury may be captured by methods such as condensation or adsorption on activated carbon or other suitable adsorbent.

Where the step of oxidation of sulfide is achieved by the addition of an oxidant, mercury may also be removed by filtration.

As an example, plant trials showed that 20 - 50 ppm sulfide added to Bayer liquor prior to precipitation of aluminium hydroxide reduced incorporation of mercury into precipitated aluminium hydroxide and reduced mercury emissions throughout the Bayer liquor circuit with the majority of emissions of mercury to air being confined to the high temperature digestion vents (these trials were conducted in a plant with a double digestion circuit where the residue is redigested to further extract the alumina). The mercury emissions from the high temperature digestion units are in a low volume gas stream with high mercury concentration, which can be treated using standard gas treatment technology involving adsorption of mercury on activated carbon or other suitable adsorbent or other suitable technology such as condensation.

In a second embodiment of the invention where the Bayer process comprises the steps:
digestion of bauxite with caustic solution;
liquid-solid separation to provide a residue and a liquor;
precipitation of aluminium hydroxide from the liquor; and
calcination of the aluminium hydroxide to provide alumina,
   the mercury complexing substance is added prior to the step of digestion of bauxite with caustic solution.

Where the method comprises the step of addition of the mercury complexing substance prior to the step of digestion of bauxite with caustic solution, the method may further comprise the step of:
adding an oxidant to the process after the step of digestion of bauxite with caustic solution and before the step of liquid-solid separation.

Where the method comprises the step of addition of an oxidant prior to the step of liquid-solid separation, the method may further comprise the step of:
mercury co-precipitation with residue solids.

In a third embodiment of the invention where the Bayer process comprises the steps:
digestion of bauxite with caustic solution;
liquid-solid separation to provide a residue and a liquor;
precipitation of aluminium hydroxide from the liquor,
oxalate precipitation from the liquor either subsequent to the precipitation of the aluminium hydroxide or co-precipitated with the aluminium hydroxide and
calcination of the aluminium hydroxide to provide alumina,
the method may comprise the further step of:
addition of sulfide prior to the step of oxalate precipitation from the liquor sufficient to maintain sulfide in solution in the liquor to inhibit mercury precipitation with aluminium hydroxide or oxalate solids.

Where the method comprises the step of addition of sulfide prior to the step of oxalate precipitation from the liquor, the method may further comprise the step of:
addition of an oxidant after the step of oxalate precipitation to oxidise sulfide.

In a fourth embodiment of the invention where the Bayer process comprises the steps:
digestion of bauxite with caustic solution;
liquid-solid separation to provide a residue and a liquor;
precipitation of aluminium hydroxide from the liquor;
oxalate precipitation from the liquor;
calcination of the aluminium hydroxide to provide alumina; and
addition of sulfide prior to oxalate precipitation sufficient to maintain sulfide in solution to inhibit mercury precipitation with aluminium hydroxide or oxalate solids,
the method comprises the further step of:
addition of an oxidant to a liquor side-stream to deplete sulfide in said side-stream.

In one form of the invention, the method may further comprise the step of:
routing the sulfide-depleted liquor side-stream to a process step in which mercury may be removed.

For example, the stream may be routed to an evaporator where mercury may be emitted from non-condensable vents. The mercury can be captured by means such as condensation or adsorption on activated carbon or other suitable adsorbent. Mercury may also be removed by filtration in the side-stream treatment process..

In accordance with the present invention, there is provided alumina produced by any one of the Bayer processes described hereinabove.

In accordance with the present invention, there is provided an apparatus for the production of alumina by any one of the Bayer processes described hereinabove.

### Brief Description of the Drawings

The present invention will now be described, by way of example only, with reference to two embodiments thereof, and the accompanying drawings, in which:-
Figure 1 is a schematic flow sheet showing how a method in accordance with the first embodiment of the present invention may be utilised in a Bayer Process circuit;
Figure 2 is another schematic flow sheet showing how a method in accordance with the first embodiment of the present invention may be utilised in a Bayer Process circuit;
Figure 3 is a schematic flow sheet showing how a method in accordance with a second embodiment of the present invention may be utilised in a Bayer Process circuit.

### Best Mode(s) for Carrying Out the Invention

Those skilled in the art will appreciate that the invention described herein is amenable to variations and modifications other than those specifically described. It is to be understood that the invention includes all such variations and modifications. The invention also includes all of the steps, features, compositions and compounds referred to or indicated in the specification, individually or collectively and any and all combinations or any two or more of the steps or features.

By way of example, the method of the present invention is described in the context of the control of mercury emissions from process streams of Bayer alumina refining, although such should not be seen as limiting the generality of the foregoing description.

The invention focuses on the control of mercury in the Bayer process by careful control of addition of sulfide or sulfide-containing compounds and the oxidation of the sulfide in the Bayer process circuit either naturally or by the introduction of an oxidant. By careful manipulation of the Bayer process chemistry through the amount and location of sulfide addition, the speciation and hence the fate and transport of mercury in the Bayer process can be more accurately predicted and controlled.

For example, high sulfide concentrations cause mercury to form a soluble sulfide complex. Low sulfide concentrations permit mercury reduction to Hg⁰ followed by volatilisation from the process liquor, or mercury sulfide can be precipitated or adsorbed on solids. Hence, it is possible to control mercury behaviour in precipitation and in other parts of the Bayer circuit thereby permitting or inhibiting emissions from locations such as digestion and evaporation vents.

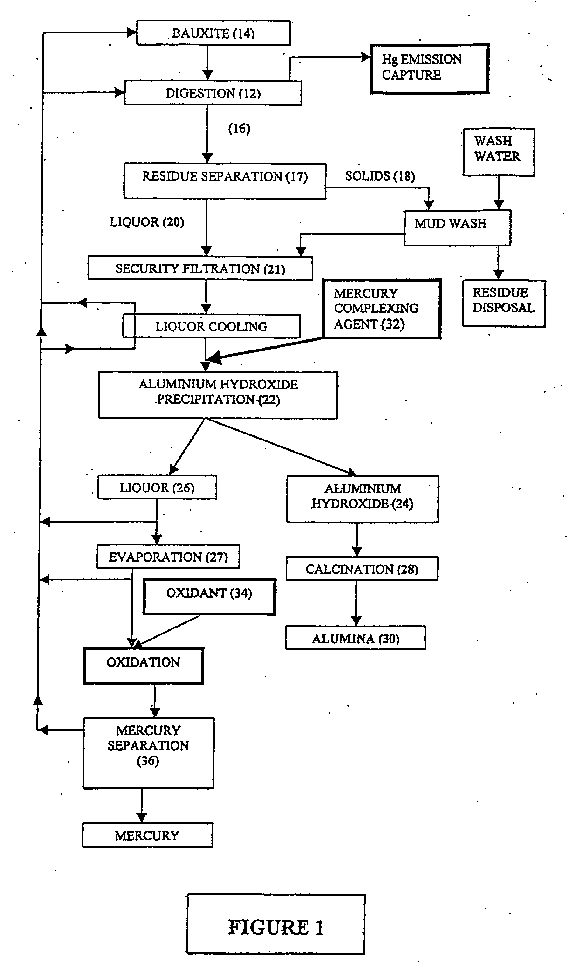

Figure 1 shows a schematic flow sheet of the Bayer process circuit for a refinery using a single digestion circuit in accordance with the first embodiment of the present invention. The Bayer process comprises the steps of:
digestion 12 of bauxite 14 in a caustic solution;
liquid-solid separation 17 of the mixture 16 to residue 18 and liquor 20;
security filtration 21 of the liquor 20;
cooling the liquor 20 to cause aluminium hydroxide precipitation 22;
separating aluminium hydroxide 24 and liquor 26;
recycling liquor 26 to digestion 12 with some or all of the liquor going through evaporation 27; and
calcining 28 the aluminium hydroxide 24 to alumina 30.

In accordance with the first embodiment the mercury complexing agent 32 as an aqueous solution containing sodium hydrogen sulfide at a concentration of about 40% sodium hydrogen sulfide by weight is added to the Bayer liquor. The location of the addition of sulfide in the Bayer process is critical due to the rapid rate of oxidation of sulfide in Bayer liquor. To maximize the concentration of sulfide in precipitation, the sulfide addition 32 is made prior to the aluminium hydroxide precipitation step 22.

The addition of sulfide causes the mercury to remain in solution during the precipitation of aluminium hydroxide 22. Prior to the return of liquor 26 to digestion step 12, the sulfide may be removed by the addition of an oxidant 34 to the liquor to oxidise sulfide ions or else sulfide may be allowed to naturally oxidise. Depletion of sulfide causes de-complexation of the mercury sulfide complex. In the absence of sulfide, mercury may be volatilised as Hg(0) from the digestion 12 or evaporation 27 processes and condensed or captured, or else mercury sulfide can be precipitated or adsorbed on solids. Mercury may also be removed by filtration where assisted depletion of sulfide is achieved by the addition of an oxidant.

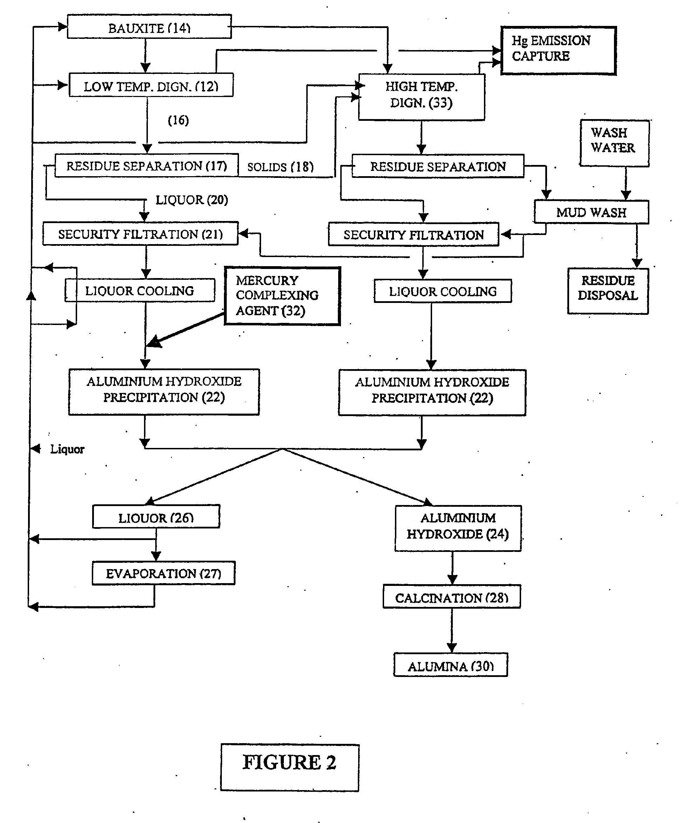

Figure 2 shows a schematic flow sheet of the Bayer process circuit for a refinery using low and high temperature digestion circuits in accordance with a first embodiment of the present invention. The process comprises the additional steps of high temperature digestion 33 of the residue 18 followed by processing of the residue in accordance with the steps outlined above. In the first embodiment of the present invention shown in Figures 1 and 2 for a Bayer process operating plant, the sulfide level is maintained at a non-zero concentration throughout the process to the digestion step 12 where the sulfide level may become zero due to natural oxidation of sulfide to sulfate in the Bayer liquor. As the mercury sulfide complex is unstable due to the oxidation of the sulfide, mercury sulfide precipitates or adsorbs on the solids in the digestion step 12 or is reduced to Hg⁰ and emitted in the non-condensable gases.

In a Bayer refinery where the residue solids are redigested (see Figure 2), mercury is emitted to atmosphere upon re-digestion of the solids from the digestion step 33. In a plant where the residue solids containing mercury are not redigested (see Figure 1), the mercury in the residue solids exits the Bayer refinery. Mercury in the non-condensable gas streams from digestion is captured using conventional technology such as condensation or carbon adsorption.

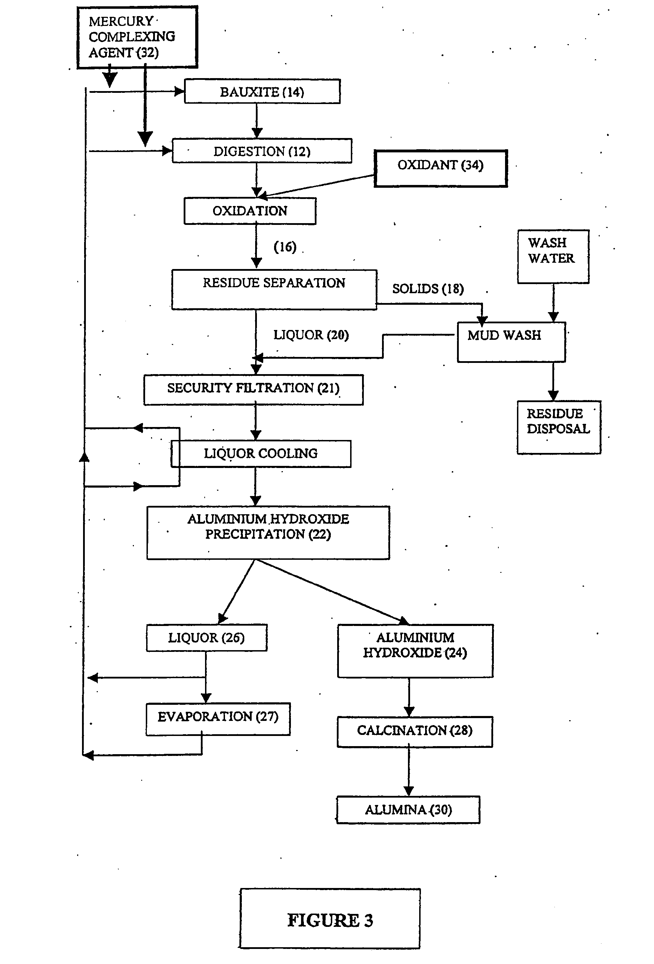

Figure 3 shows a schematic flow sheet of the Bayer process circuit for a refinery using a single digestion circuit and using oxidation downstream of the digestion step in accordance with the second embodiment of the present invention. The Bayer process comprises the steps of:
digestion 12 of bauxite 14 in a caustic solution;
liquid-solid separation 17 of the mixture 16 to residue 18 and liquor 20;
security filtration 21 of the liquor 20;
cooling the liquor 20 to cause aluminium hydroxide precipitation 22;
separating aluminium hydroxide 24 and liquor 26;
recycling liquor 26 to digestion 12 with some or all of the liquor going through evaporation 27; and
calcining 28 the aluminium hydroxide 24 to alumina 30.

In accordance with the second embodiment of the present invention, a mercury complexing agent such as sulfide 32 is added to the Bayer process prior to the digestion step 12. A measured and controlled addition of sulfide at this location prevents the emission of mercury from the off-gases from digestion 12. Oxidation of sulfide can occur naturally in the Bayer process at various rates, depending upon the temperature and circuit design. Assisted sulfide oxidation by addition of an oxidant 34 downstream of digestion 12 and prior to the liquid-solid separation step 17 causes the mercury sulfide complex to be destabilised and the mercury to be precipitated or adsorbed on solids 18 that exit the Bayer process as mud.

The following Examples serve to more fully describe the manner of using the above-described invention, as well as to set forth the best modes contemplated for carrying out various aspects of the invention. It is understood that these Examples in no way serve to limit the true scope of this invention, but rather are presented for illustrative purposes.

### Example 1

Bench trials 1 and 2 were conducted using varying additions of sulfide to Bayer green liquor already containing dissolved mercury prior to aluminium hydroxide precipitation to demonstrate the stabilisation of mercury by sulfide. The mercury contents remaining in the liquor and present on the precipitated hydrate were monitored. Two sulfide addition chemicals were used: sodium hydrogen sulfide and an organic sulfide chemical.

The experimental procedure was as follows:
a) Plant green liquor from low temperature digestion was used for all the precipitation trials. For each trial, a volume of 800 mL was added to plastic precipitation bottles that had been pre-rinsed with nitric acid and washed;
b) In the first set of trials, sulfide was added to the liquor in the precipitation bottles at the following levels: 0, 50 and 99 ppm in the form of 280 gL⁻¹ NaHS and 0, 26 and 52 ppm sulfide as an organosulfide. In the second experiment, 0, 2, 5,10, 20, and 50 ppm of sulfide from 280 gL⁻¹ NaHS was added;
c) The hydrate seed used was Alcoa C31 Fine (80 grams used);
d) The precipitations were carried out in a rolling bottle oven starting at 80°C for one hour and then lowered to 65°C and held for 18 hours;
e) After 18 hours, the contents of each bottle were allowed to settle. Two samples were removed from the liquor portion of each bottle with a 50 mL (nitric acid rinsed) syringe. The first sample was sent for liquor analyses. The second sample was pressure filtered through a syringe filter with 23 mL put in a 35 mL glass shipping bottle along with 2 mL of 400 gL⁻¹ sodium gluconate. These samples were sent for mercury analyses. The remaining slurries were filtered on a Büchner funnel and the solids were washed with deionized water, dried, weighed and analysed for mercury; and
f) In the second trial, two of the precipitation bottles were nitric acid rinsed after the precipitation slurry had been rinsed out of the bottle for filtration. The acid rinse was sent for mercury analysis. The purpose of this acid rinse was to check for mercury absorbed into the plastic bottle.

The results of the two sets of precipitation trials are listed in Tables 1 and 2. In Table 1, the addition of both NaHS and the organosulfide substantially prevented mercury from being incorporated in the precipitated hydrate and also showed a reduction in the amount of mercury in the original seed. The tests also indicated that the lowest levels of addition of 50 ppm for NaHS and 26 ppm for the organosulfide were more than enough to effect the change and therefore formed the basis for the second experiment.

In Trial 2, only NaHS was used as the added sulfide chemical. This set of experimental results indicated that at 2 ppm sulfide addition, mercury was still being incorporated into the precipitated hydrate but at 5 ppm the mercury was no longer present in the new hydrate and there was a reduction of mercury in the seed hydrate. In this experiment, the precipitation bottles from the 0 ppm addition and the 50 ppm addition trials were nitric acid leached with 50 mL of 10% nitric acid after the precipitation slurry contents had been rinsed out. The analyses of the mercury in the acid rinses indicated that detectable amounts, but less than 1 % of the total mercury, were present in the rinse from the 0 ppm addition and essentially none was detected from the 50 ppm test bottle walls.

It was observed from these trials that addition of about 5 ppm or more of sulfide to liquor prior to laboratory precipitation ensured that no mercury was precipitated on the hydrate.

Plant trials conducted in a refining plant indicated that mercury remains in solution with minimal incorporation into precipitated hydrate as long as there is residual sulfide in liquor at the end of precipitation (see Table 2A). Prior to sulfide addition trials, the typical concentration of mercury on aluminium hydroxide from the refinery was 180 - 250 ppb, which at that time accounted for approximately 60 - 70 % of the Bayer plant air emissions of mercury at that plant. Following the addition of sulfide to plant liquors the mercury content of hydrate reduced, typically to about 10 ppb.

### Example 2

Laboratory trial 3 investigated the impact of sulfide and oxidant additions to digested bauxite slurries to demonstrate how mercury could be reduced in Bayer liquor and increased in bauxite residue after digestion.

Trial 3 utilised low temperature bomb digests to create fresh slurries of liquor and residue under lab conditions. Addition of sulfide to digestion slurries was expected to increase mercury in solution and decrease the mercury on the residue. Adding hydrogen peroxide was expected to have the effect of oxidizing sulfide in solution to sulfate and releasing the mercury from mercury sulfide complex to precipitate or adsorb on the residue.

The experimental procedure for Trial 3 comprised digestion of bauxite in 100 mL bombs, starting with bauxite and spent liquor and digesting at 148 °C with and without chemical additives. Various combinations of sulfide and peroxide addition were used for different samples. The procedures used were:
a) 100 mL titanium bombs were filled with 80 mL test tank liquor and 12.8 g of bauxite and digested at 148 °C for 20 minutes;
b) 17 % hydrogen peroxide and 7.4 % ^{w}/ᵥ sulfide solution prepared from sodium sulfide in water were used. The sulfide was added to the bomb contents before digestion while the peroxide was added after the digest bomb had been cooled down to 100 °C. All bombs were allowed to have an air space present.
c) Each of the whole bomb contents were centrifuged and 23 mL subsamples of liquor were pressure-filtered using a syringe into a labelled glass GC vial for mercury analysis. 2 mL of 400 gL⁻¹ sodium gluconate was added to each vial for liquor stability during shipping;
d) The remainder of each slurry sample was filtered on a Büchner filter, the solids washed with deionised water, dried and analysed for mercury; and
e) The grams of dried residue per bomb was 5.2 g and liquor was 80.0 mL.

The experimental results from Trial 3 are shown in Table 3. The mercury content of the spent liquor and bauxite were assumed values typical of what was being measured in the plant sampling at the time of the experiment. All experiments reported in Table 3 were conducted using one sample of bauxite and spent liquor. All digests contained some air in the head space of the bomb. Sample 1 contained no additives in the form of sulfides or oxidants. The test with sample 1 showed a reduction of mercury in the liquor and a very high percentage of the mercury in the residue. This result appears consistent with later plant samples of low temperature digest slurries during sulfide addition tests and aerobic and anaerobic sampling tests as shown in Table 5.

The presence of sulfide during digestion of Sample 2 increased mercury in solution and decreased mercury in residue. In Samples 3 and 4, the result of adding hydrogen peroxide to the digested slurry at 100 °C was to reduce the amount of mercury in solution and increase the amount in the residue.

Sample 5 was a combination of adding sulfide during digestion followed by a large dose of hydrogen peroxide after digestion. This resulted in a very small amount of mercury in solution and essentially all of the mercury in the residue.

The results support the hypothesis that sulfide will put mercury into solution in the highly alkaline Bayer liquor by forming a soluble mercury sulfide complex and subsequent addition of hydrogen peroxide will then oxidize the sulfide to sulfate and cause a release of the mercury onto the residue solids present.

Trials 4 & 5 were carried out utilising thickener feed slurries collected in the plant after low temperature digestion. In Trials 4 and 5, plant slurry samples were obtained in the field, in 1 L nitric acid rinsed bottles, from the low temperature digestion thickener header. The slurries were treated in various ways by incorporating additives into the slurries being held in plastic bottles in a rolling bottle oven. The procedures were as follows:
a) Approximately 900 mL of low temperature thickener feed slurry samples were placed in 1 L nitric acid rinsed plastic bottles. The designated additives were added, then the closed bottles were rolled in a 95°C air oven for 10 minutes or 60 minutes as applicable;
b) Chemicals used as additives to the slurries in the bottles during Trials 4 and 5 were 50% hydrogen peroxide and/or 25% NaHS.
c) After the indicated time in the oven, the bottles were removed, shaken and 100 mL extracted from each bottle and centrifuged for 20 minutes. Subsamples of decant liquor (23 mL) from the centrifuge tubes were pressure filtered using a syringe into a labelled glass GC vial for mercury analysis. 2 mL of 400 gL⁻¹ sodium gluconate was added to each vial for liquor stability during shipping;
d) In addition to the centrifuge sample taken from Sample 1, 200 mL of slurry was filtered, the solids washed, dried and weighed to use for the experiment material balance calculations;
e) The remainder of each slurry sample was filtered on a Buchner filter, the solids washed with deionised water, dried and analysed for mercury; and
f) The amount of dried residue per 100 mL of slurry measured on one slurry sample in Trial 4 was 6.7 g and the liquor volume is calculated to be 97.9 mL. For Trial 5 by similar measurements the solids were 5.2 g and the liquor was 98.4 mL

The experimental results for Trial 4 are shown in Table 4. In this trial, duplicates were made up of each treatment case and one of the duplicate samples was left in the rolling bottle oven for 10 minutes while the second was left for 60 minutes. This was to test whether reaction time of the chemical was important. The results indicated that there was no significant difference between the 10 and 60 minute samples.

In Trial 5 low temperature digest thickener feed slurries were again sampled in the field but care was now taken to exclude air from the experimental bottles. The procedure followed was as follows:
a) For Sample 1 of the trial, the nitric acid rinsed 1 L plastic bottle was filled in the field as before leaving 100 mL of air space in the bottle. For the rest of the samples, the 1 L bottles were filled to 900 mL and squeezed to remove any air before capping;
b) For this trial, only 50% hydrogen peroxide was used as a chemical additive. The procedure for treating with hydrogen peroxide was to inject the hydrogen peroxide with a hypodermic needle syringe, into the contents of the plastic bottle through a rubber stopper inserted into the bottle mouth. The rubber stopper was placed in the bottle opening after the samples were brought into the laboratory. The bottles were squeezed to remove air prior to forcing the rubber stopper into the neck. The rubber stopper was then held in place while in the oven by having the normal bottle stopper screwed on. When the hydrogen peroxide solution was added to the hot slurry, there was a rapid evolution of gasses. The stopper in the bottleneck prevented that gas from escaping the bottle;
c) After 10 - 15 minutes in the oven, the bottles were removed, shaken, 100 mL extracted from each bottle and centrifuged for 20 minutes. Subsamples of decant liquor (23 mL) from the centrifuge tubes from each experiment were added into a labelled glass GC vial for mercury analysis along with 2 mL of 400 gL⁻¹ sodium gluconate for liquor stability during shipping;
d) In addition to the centrifuge sample taken from Sample 1, 200 mL of slurry was measured out, filtered, the solids washed, dried and weighed to use for the experiment material balance calculations; and
e) The remaining liquor was decanted out of the centrifuge tubes, deionised water added, the tube re-sealed and shaken to re-suspend solids. The contents of the two tubes from each experiment were combined on a Büchner funnel, washed, and dried to obtain the solids for Hg analysis.

The amount of dried residue per 100 mL of slurry measured on one slurry sample in Trial 5 was 5.0 g and the liquor volume was calculated to be 98.4 mL.

The results of Trial 5 are shown in Table 5. Sample 1 showed that the presence of air in the sample bottle decreased the mercury level in the liquor compared to Sample 2, which was squeezed and capped to reduce the air entrapped in the sample bottle. The data for samples 1 & 2 show noticeably lower mercury in liquor compared to values obtaining in the plant at that time. Samples 3 through 6 showed that hydrogen peroxide addition to low temperature digest slurries reduced the mercury in the liquor further to very low levels.

Tables 6A and 6B show mercury partitioning between liquid, solid and gas during a short plant trial at one refinery location. A low dose of sulfide was added to liquor to digestion a few days prior to sulfide being added to the main circuit, to avoid confounding effects. A very low level of sulfide addition into liquor to digestion reduced mercury partitioning to gas by 90-98%, minimised mercury partitioning to solids and increased partitioning of mercury to solution.

Table 7 summarises results gathered during laboratory trials on plant samples taken at one refinery location on two separate occasions. Data in the first part of table 7 show the effect of sulfide or hydrogen peroxide dosing into a plant thickener feed, with zero initial sulfide. Data in the second part of the table show the effect of hydrogen peroxide addition to a plant thickener feed with high initial sulfide. Mercury is minimised in solids with sulfide addition and maximised in solution. The reverse is true for oxidation of sulfide in slurries with hydrogen peroxide addition

Table 8 shows that mercury sulfide complex can be removed from liquor when sulfide is oxidised even in the absence of solids.

Modifications and variations such as would be apparent to a skilled addressee are deemed to be within the scope of the present invention.

**Table 1 Precipitation of Hydrate in Presence of Sulfide - Trial 1**

| | **Start Solutions** | | | | | | **Liquor Analyses** | | | | | |
|---|---|---|---|---|---|---|---|---|---|---|---|---|
| **Sample** | **Liquor (mL)** | **NaHS 280gL⁻¹** (µL) | | **Organosul fide (µL)** | **Water (µL)** | **S in Soln. (ppm)** | **TC (gL⁻¹**) | **TA (gL⁻¹**) | **Al₂**O**₃** (gL**⁻¹**) | **A/TC** | **Precip. Yield (gL⁻¹**)** | **Dried Hydrate Wt. (g)** |
| 1 | 800 | 0 | | | 8000 | 0 | | | | | 69.5 | 165.07 |
| 2 | 800 | 250 | | | 7750 | 49.5 | | | | | 69.4 | 164.85 |
| 3 | 800 | 500 | | | 7500 | 99.0 | | | | | 70.8 | 166.58 |
| 4 | 800 | | | 40 | 7960 | 26.0 | | | | | 72.0 | 168.13 |
| 5 | 800 | | | 80 | 7920 | 52.0 | | | | | 71.5 | 167.52 |
| 6 | **Start liquor** | | | | | | 264.7 | 334.2 | 195.9 | 0.740 | 70.2# | |
| **Sample** | **Seed Hyd (g)** | | **Yield hyd (g)** | **Yield Al₂**O**₃** (g) From solids | **Calc. Liquor Yield (g)** | **Hg in liquor(µgL⁻¹**) | **Hg in Solids (ppb)** | **Final Hg in Liq (µg)** | **Final Hg in Hydr (µg)** | **Initial Hg in Liq & hydrate (µg)** | **Not Change (µg)** | **Hg on New Hydrate (ppb)** |
| 1 | 80 | | 85.1 | 55.6 | 56.2 | 0.35 | 74.2 | 0.27 | 12.25 | 14.59 | -2.08 | 131.0 |
| 2 | 80 | | 84.9 | 55.5 | | 14.90 | 2.4 | 11.48 | 0.40 | 14.59 | -2.71 | -8.3 |
| 3 | 80 | | 86.6 | 56.6 | | 14.80 | 2.0 | 11.40 | 0.33 | 14.59 | -2.86 | -8.9 |
| 4 | 80 | | 88.1 | 57.6 | | 14.37 | 1.1 | 11.06 | 0.18 | 14.59 | -3.35 | -10.4 |
| 5 | 80 | | 87.5 | 57.2 | | 14.63 | 2.2 | 11.26 | 0.37 | 14.59 | -2.96 | -8.4 |
| 6 | Start liquor | | | | | 18.86 | | | | | | |
| 7 | C-31 Fine (hydrate) | | | | | | 13.8* | | | | | |

| | | | | | | | | | | | | |
|---|---|---|---|---|---|---|---|---|---|---|---|---|
| *- *Note that final solid Hg was lower than start solids when sulfide was added* **- Precipitation yield based on dried hydrate weight allowing for 80 gms. of seed added # - Precipitation yield calculated from start and one final liquor | | | | | | | | | | | | |

**Table 2 Precipitation of Hydrate in Presence of Sulfide - Trial 2**

| | **Start Solutions** | | | | | **Liquor Analyses** | | | | | | |
|---|---|---|---|---|---|---|---|---|---|---|---|---|
| **Sample** | **Liquor (mL)** | **NaHS 280 gL⁻¹ (µL)** | | **Water (µL)** | **S in Soln. (ppm)** | **TC (gL⁻¹**) | **TA (gL⁻¹**) | **Al₂**O**₃** (gL⁻¹) | **A/TC** | **TC/TA** | **Precip. Yield (gL⁻¹)** | **Dried Hydrate Wt. (g)** |
| 1 | 800 | 0 | | 500 | 0 | 283.2 | 360.4 | 135.5 | 0.479 | 0.786 | 72.7 | 165.37 |
| 2 | 800 | 10 | | 490 | 2 | 278.8 . | 359.6 | 134.9 | 0.484 | 0.775 | 71.4 | 165.88 |
| 3 | 800 | 25 | | 475 | 5 | 283.2 | 357.6 | 135.9 | 0.480 | 0.792 | 72.5 | 166.64 |
| 4 | 808 | 50 | | 450 | 10 | 277.8 | 361.3 | 135.5 | 0.488 | 0.769 | 70.4 | 166.40 |
| 5 | 800 | 100 | | 400 | 20 | 281.8 | 359.8 | 136.4 | 0.484 | 0.783 | 71.4 | 166.76 |
| 6 | 800 | 250 | | 250 | 50 | 283.2 | 360.4 | 136.2 | 0.481 | 0.786 | 72.2 | 166.26 |
| 9 | **start liquor** | | | | | 265.49 | 344.06 | 199.95 | 0.753 | 0.772 | | |
| **Sample** | **Seed Hyd (g)** | | **Yield hyd (g)** | **Yield Al₂O₃ (g) From solids** | **Calc. Liquor Yield (g)** | **Hg in liquor (µgL⁻¹)** | **Hg In Solids (ppb)** | **Final Hg in liq (µg)** | **Final Hg In hydr (µg)** | **Initial Hg in liq & hydr (µg)** | **Net Change (µg)** | **Hg on New Hydrate (ppb)** |
| 1 | 80 | | 85.4 | 55.8 | 58.2 | 0.41 | 76.2 | 0.32 | 12.60 | 14.59 | -1.66 | 134.7 |
| 2 | 80 | | 85.9 | 56.2 | 57.1 | 0.40 | 86.7 | 0.31 | 14.38 | 14.59 | 0.12 | 154.6 |
| 3 | 80 | | 86.6 | 56.7 | 58.0 | 15.83 | 2.0 | 12.19 | 0.33 | 14.59 | -2.07 | -8.9 |
| 4 | 80 | | 86.4 | 56.5 | 56.3 | 21.60 | 3.2 | 16.64 | 0.53 | 14.59 | 2.58 | -6.6 |
| 5 | 80 | | 86.8 | 56.7 | 57.1 | 19.32 | 1.0 | 14.88 | 0.17 | 14.59 | 0.45 | -10.8 |
| 6 | 80 | | 86.3 | 56.4 | 57.8 | 16.63 | 1.1 | 12.81 | 0.18 | 14.59 | -1.60 | -10.7 |
| 7 | **(acid leach of 0 ppm bottle)** | | | | | 0.34 | | 0.02 | | | | |
| 8 | **(acid leach of 50 ppm bottle)** | | | | | 0.02 | | 0 | | | | |
| 9 | **start liquor** | | | | | 16.86 | | | | | | |
| 10 | **C-31Fine (hydrate)** | | | | | | 13.8* | | | | | |

| | | | | | | | | | | | | |
|---|---|---|---|---|---|---|---|---|---|---|---|---|
| * Note that final solid Hg was lower in final hydrate than start hydrate when sulfide addition was 5ppm or greater | | | | | | | | | | | | |

**Table 2A: Sulfide in spent liquor and mercury in precipitated aluminium hydroxide**

| | Sulphide in Liquor to Digestion ppm | Mercury in precipitated Aluminium Hydroxide ppb |
|---|---|---|
| Period 1 | 0.7 | 4.7 |
| Period 2 | 8.6 | 3.6 |
| Period 3 | 0.1 | 4.7 |
| Ave. For the entire period | 2.9 | 4.2 |

**Table 3 Effect of Sulfide and hrdrogen peroxide in laboratory bomb digests - Trial 3**

| **Samples** | **Headspace in Bomb** | **17 % H₂O₃ (µL)** | **H₂O₂ (mgL⁻¹)** | **7.4% w/v S (µL)** | **S (mgL⁻¹)** | **Hg in liq (µgL⁻¹)** | **Hg in Residue (µgg⁻¹)** | **Total Hg in Final (µg)** | **% Hg in liquor** | **% Hg in Residue** | **% of Hg unaccounted** |
|---|---|---|---|---|---|---|---|---|---|---|---|
| | | | | | | | | | | | |
| 1 | air | 0 | 0 | 0 | 0 | 6.74 | 0.512 | 3.20 | 16.4% | 81.2% | 2.4% |
| 2 | air | 0 | 0 | 53 | 50 | 22.50 | 0.259 | . 3.15 | 54.9% | 41.1 % | 4.1 % |
| 3 | air | 20 | 40 | 0 | 0 | 7.61 | 0.526 | 3.34 | 18.6% | 83.4% | -1.9% . |
| 4 | air | 100 | 200 | 0 | 0 | 2.72 | 0.601 | 3.34 | 6.6% | 95.3% | -1.9% |
| 5 | air | 200 | 400 | 53 | 50 | 0.38 | 0.777 | 4.07 | 0.9% | 123.2% | -24.1% |
| Bauxite | | | | | | | 0.200 | | | 78.0% | |
| LTD* | | | | | | 9.00 | | | 22.0% | | |
| Calculated Start Slurry | | | | | | | | 3.28 | | | |

| | | | | | | | | | | | |
|---|---|---|---|---|---|---|---|---|---|---|---|
| *-LTD-Liquor to Digestion Sulfide increased Hg in solution and decreased Hg in residue. Extra oxidant increased Hg in residue and minimised Hg in solution | | | | | | | | | | | |

**Table 4 Chemical Addition to LT Thickener Samples to Determine effect of Sulfide or Hydrogen Peroxide - Trial 4**

| **Sample** | **Oven (mins)** | **NaHS 25% S** (µL) | **S (mgL⁻¹)** | **50% H₂O₂ (µL)** | **H₂O₂ (mgL⁻¹)** | **Hg in liq (µgL⁻¹)** | **Hg in Residue (µgg⁻¹)** | **Total Hg in Final(µg)** | **% Hg in liquor** | **% Hg in Residue** | **% of Hg unaccounted** |
|---|---|---|---|---|---|---|---|---|---|---|---|
| 1 | 10 0 | | 0 | 0 | 0 | 5.8 | 1.57 | 11.03 | 4.2% | 77.8% | 18.1% |
| 2 | 60 | 0 | 0 | 0 | 0 | 4.4 | 1.57 | 10.90 | 3.2% | 77.8% | 19.0% |
| 3 | 10 | 180 | 50 | 0 | 0 | 103.3 | .0.24 | 11.70 | 75.1% | 11.8% | 13.1% |
| 4 | 60 | 180 | 50 | 0 | 0 | 106.3 | 0.23 | 11.91 | 77.4% | 11.2% | 11.5% |
| 5 | 10 | 0 | 0 | 36 | 20 | 2.7 | 2.03 | 13.81 | 2.0% | 100.6% | -2.6% |
| 6 | 60 | 0 | 0 | 36 | 20 | 2.9 | 2.06 | 13.98 | 2.1 % | 101.8% | -3.9% |
| 7 | 10 | 0 | 0 | 90 | 50 | 0.9 | 2.19 | 14.67 | 0.6% | 108.3% | -9.0% |
| 8 | 60 | 0 | 0 | 90 | 50 | 4.6 | 1.87 | 12.92 | 3.3% | 92.7% | 4.0% |
| 9 | 10 | 0 | 0 | 900 | 500 | 1.1 | 2.25 | 15.10 | 0.8% | 111.5% | -12.3% |
| 10 | 60 | 0 | 0 | 900 | 500 | 1.7 | 1.97 | 13.26 | 1.2% | 97.3% | 1.5% |
| | | | | | | | average | 12.93 | | | |
| LTD | | | | | | 91.7* | | | | | |
| LTP | | | | | | 104.5 | | | 76.0% | | |
| | | | | | | | | | | | |
| Calculated Start Slurry | | | | | | | | 13.46 | | | |

| | | | | | | | | | | | |
|---|---|---|---|---|---|---|---|---|---|---|---|
| *- Hg content of liquors were lower than start liquor unless sulfide was added. Sulfide maximised Hg in solution. Peroxide increased Hg in residue and minimised losses *(solids were filtered under vacuum)* LTD - Liquor to Digestion; LTP - Liquor to Precipitation | | | | | | | | | | | |

**Table 5: Effect of Sambling Technique and Extra Oxidation of LT Thickener Feed Samples on Hg Partitioning**

| **Samples** | **Air Space in bottle** | **50% H₂**O**₂** (µL) | **H₂**O**₂** (mgL⁻¹) | **Hg in liq.(µgL⁻¹**) | **Hg in Residue (µgg⁻¹**) | **Total Hg in Final (µg)** | **% Hg in liquor** | **% Hg in Residue** | **% of Hg unaccounted** |
|---|---|---|---|---|---|---|---|---|---|
| 1 | Yes | 0 | 0 | 39.2 | 4.33 | 25.51 | 15.3% | 86.0% | -1.4% |
| 2 | No | 0 | 0 | 83.2 | 3.62 | 26.28 | 32.5% | 71.9% | -4.4% |
| 3 | No | 360 | 200 | 2.2 | 4.34 | 21.89 | 0.9% | 86.1% | 13.0% |
| 4 | No | 180 | 100 | 3.8 | 3.95 | 20.10 | 1.5% | 78.4% | 20.1% |
| 5 | No | 90 | 50 | 4.0 | 4.29 | 21.84 | 1.5% | 85.2% | 13.2% |
| 6 | No | 45 | 25 | 5.5 | 4.41 | 22.57 | 2.2% | 87.5% | 10.3% |
| | | | | | Ave. | 23.03 | | | |
| LTD | | | | 244.2* | | | | | |
| LTP | | | | 220.7 | | | 86.3% | | |
| Calculated Start Slurry | | | | | | 25.16 | | | |

| | | | | | | | | | |
|---|---|---|---|---|---|---|---|---|---|
| LTD - Liquor to Digestion; LTP - Liquor to Precipitation *- Less air maximised Hg in solution but sampling was not anaerobic even without air in headspace. Therefore, Hg in solution was lower than the start liquors. Extra oxidation with peroxide further increased Hg In residue and minimised Hg in solution | | | | | | | | | |

**Table 6A: Partitioning of Ha between solids and liquid during low dose of sulfide in liquor to digestion**

| **Titration results** | | **Hg in one litre of slurry input** | | | **Hg in one litre of slurry outputs** | | | **Recovery** | **Partitioning of Hg** | |
|---|---|---|---|---|---|---|---|---|---|---|
| **Actual S Into digestion** | **Actual S Ex digestion** | **Hg in liquid** | **Hg in Solids** | **Hg in total** | **Hg out liquid** | **Hg out Solids** | **Hg out total** | **of Hg out/in** | **Hg into liquid** | **Hg into solid** |
| **ppm** | **ppm** | **µg** | **µg** | **µg** | **µg** | **µg** | **µg** | **%** | **%** | **%** |
| 0 | 0 | 3.2 | 24.6 | 27.8 | 2.2 | 29.8 | 32.0 | 115 | 7 | 93 |
| 0 | 0 | 4.2 | 25.0 | 29.2 | 3.3 | 23.9 | 27.2 | 93 | 12 | 88 |
| 14.8 | 4.3 | 4.2 | 25.8 | 30.0 | 20.4 | 11.2 | 31.6 | 105 | 65 | 35 |

| | | | | | | | | | | |
|---|---|---|---|---|---|---|---|---|---|---|
| sulfide was oxidised in digestion and Hg was moved from solid to liquid by low level of sulfide addition Hg remained partitioned mainly to solid in a unit fed with the same input slurry but without sulfide added | | | | | | | | | | |

**Table 6B: Effect of adding low dose of sulfide to digestion on mercury concentration in vent gases**

| | **Sorbent** | **Lumex** | **Short trial adding sulfide into liquor fed to digestion** |
|---|---|---|---|
| | **[Hg]** | **[Hg]** | |
| | **Wet ugm-3** | **Wet µg m⁻³** | |
| Obs # | **non cons** | **In BO vent** | **Comments** |
| 1 | | 9.9 | baseline |
| 2 | 269 | 6.4 | baseline |
| 3 | 17.3 | 0.12 | with 10 ppm sulfide |
| 4 | 19.5 | 0.055 | with 10 ppm sulfide |
| 5 | | 0.050 | addition terminated, sulfide decreasing |
| 6 | | 0.81 | addition terminated, sulfide decreasing |
| 7 | | 2.6 | addition terminated, sulfide decreasing |
| 8 | 23.0 | 0.054 | with 5 ppm sulfide |
| 9 | | 0.20 | addition terminated, sulfide decreasing |
| 10 | | 1.3 | addition terminated, sulfide decreasing |
| 11 | | 3.0 | addition terminated, sulfide decreasing |
| 12 | | 3.2 | addition terminated, sulfide decreasing |

| | | | |
|---|---|---|---|
| For 5ppm or 10ppm of sulfide addition into TTK liquor: There was approx 90 % reduction in Hg emission to non cons and a 98% reduction in Hg emission into BO (blow off) vents | | | |

**Table 7: Results or addition of sulfide and peroxide to plant slurries ex digestion**

| Sample | Nominal H₂O₂ (mg/L) | Total sulfide (ppm)^{a} | Hg in Liquor (µg/L) | Hg in Solids (ng/g) | Total Hg (µg in 1L slurry) |
|---|---|---|---|---|---|
| A Thk feed^{b} | 0 | 0 | 5.8 | 1571 | 162.7 |
| A Thk feed | 0 | 50 | 103.3 | 238 | 123.8 |
| A Thk feed | 20 | - | 2.7 | 2033 | 205.9 |
| A Thk feed | 50 | - | 0.9 | 2189 | 219.8 |
| A Thk feed | 500 | - | 1.1 | 2252 | 226.3 |
| B Thk feed | 0.0 | 41.3 | 407.3 | 109.4 | 416.3 |
| B Thk feed | 111 | 14.2 | 434.2 | 169.8 | 450.7 |
| B Thk feed | 167 | 0.0 | 17.3 | 3,117 | 376.3 |
| B Thk feed | 223 | 0.0 | 1.5 | 3,080 | 379.3 |

| | | | | | |
|---|---|---|---|---|---|
| ^{a} Total Sulfide was measured only in B Thk samples. 50ppm recorded for A Thk was the nominal sulfide dose and the A Thk initial value was 0 ppm total sulfide ^{b} Thk feed = thickener feed | | | | | |

**Table 8: Effect of oxidising liquor containing mercury sulfide complex in the absence of solids**

| LTD liquor with 1335 ng/mL Hg + 10ppm sulfide, 90°C, scrubbed with air nominally at 3 lits per min | | | |
|---|---|---|---|
| Excess hydrogen peroxide was then added with continued air-scrubbing for a further 60 minutes | | | |
| **Conditions** | **Free sulfide** | **Hg remaining in solution** | **Comments** |
| | **ppm** | **%** | |
| **Initial dose** | 8 | 100 | |
| **60 min aeration** | 5 | 97 | 5ppm sulfide kept 1300ng/ml Hg in solution despite aeration at 90°C |
| **+60 min aeration with excess peroxide** | 0 | 9 | Removal of sulfide caused Hg to become unstable in solution |

| | | | |
|---|---|---|---|
| Results show that Mercury sulfide complex can be removed from liquor when sulfide is oxidised even in the absence of solids. | | | |

## Claims

1. A method for controlling mercury emissions from mercury containing Bayer process solutions comprising the steps of:
adding a mercury complexing substance to the process stream,
permitting or causing the depletion of the complexing substance at a first desired location; and
facilitating emission of mercury at a second desired location,
wherein the Bayer process includes the steps of:
digesting bauxite with caustic solution;
separating the liquid-solid to provide a residue and a liquor;
precipitating aluminium hydroxide from the liquor; and
calcining the aluminium hydroxide to provide alumina,
and wherein the mercury complexing substance is added to the Bayer process stream prior to the step of precipitation of aluminium hydroxide from the liquor.

2. A method as claimed in claim 1, wherein the mercury complexing substance is added to the Bayer process stream prior to the step of digesting bauxite with caustic solution.

3. A method as claimed in either claim 1 or claim 2, wherein the mercury complexing substance is provided in the form of sulfide ions.

4. A method as claimed in any one of the preceding claims, wherein the step of adding the sulfide ions to the Bayer process stream includes the step of:
adding sufficient sulfide ions such that the process stream contains free sulfide.

5. A method as claimed in any one of the preceding claims, wherein the sulfide ions are provided in the form of sodium hydrogen sulfide.

6. A method as claimed in either claim 3 or 4, wherein the sulfide ions are provided in the form of an organosulfide compound.

7. A method as claimed in any one of the preceding claims, wherein the step of permitting or causing the depletion of the mercury complexing substance is performed by oxidation of the mercury complexing substance.

8. A method as claimed in claim 7 when dependent upon claim 3, wherein the step of permitting or causing the depletion of the mercury complexing substance by oxidation of the mercury complexing substance includes the step of:
adding an oxidant to the process to oxidise sulfide to sulfate.

9. A method as claimed in claim 8, wherein the oxidant is provided in the form of air, oxygen, ozone, hydrogen peroxide, hypochlorite anion or permanganate anion.

10. A method as claimed in any one of the preceding claims, wherein the mercury complexing substance is added after the step of liquid-solid separation.

11. A method as claimed in claim 10, wherein the mercury complexing substance is provided in the form of sulphide ions and method comprises the further step of:
maintaining sufficient sulfide concentration before the step of precipitation of aluminium hydroxide such that there is free sulfide in the Bayer liquor after aluminium hydroxide precipitation.

12. A method as claimed in any one of the proceeding claims, including the step of:
maintaining the free sulfide concentration in the Bayer liquor between about 10 - 50 ppm before aluminium hydroxide precipitation.

13. A method as claimed in either claim 11 or claim 12 when dependent upon claim 8, wherein the oxidant is added to the liquor from the step of precipitation of aluminium hydroxide from the liquor.

14. A method as claimed in either claim 11 or claim 12 when dependent upon claim 8, wherein the oxidant is added to the Bayer process solution before the step of digestion of bauxite with caustic solution.

15. A method as claimed in any one of preceding claims including the step of:
removing mercury from the Bayer process stream by volatilisation in non-condensable gases from evaporation and/or digestion.

16. A method as claimed in any one of claims 8 to 15 when dependent upon claim 8, including the step of:
adding the oxidant to the process after the step of digestion of bauxite with caustic solution and before the step of liquid-solid separation.

17. A method as claimed in claim 16, including the step of:
co-precipitating mercury with residue solids.

18. A method as claimed in any one of claims 3 to 17, wherein the Bayer process includes the step of:
precipitating oxalate from the liquor either subsequent to the precipitation of the aluminium hydroxide or co-precipitated with the aluminium hydroxide;
and wherein the method includes the step of:
adding the sulfide prior to the step of oxalate precipitation from the liquor sufficient to maintain sulfide in solution in the liquor to inhibit mercury precipitation with aluminium hydroxide or oxalate solids.

19. A method as claimed in claim 18 when dependent upon claim 8, wherein the method comprises the step of:
adding the oxidant after the step of oxalate precipitation to oxidise sulfide.

20. A method as claimed in any one of claims 8 to 17, wherein the Bayer process includes the step of:
adding sulfide prior to oxalate precipitation sufficient to maintain sulfide in solution to inhibit mercury precipitation with aluminium hydroxide or oxalate solids,
and wherein the method includes the step of:
adding the oxidant to a liquor side-stream to deplete sulfide in said side-stream; and
routing the sulfide-depleted liquor side-stream to a process step in which mercury may be removed.

## Patentansprüche

1. Verfahren zum Kontrollieren von Quecksilberemissionen aus Lösungen im Bayer-Verfahren, die Quecksilber enthalten, wobei das Verfahren die Schritte umfasst:
Zugeben einer Substanz, die Quecksilber komplexiert, in den Verfahrensstrom,
Zulassen oder Bewirken der Abreicherung an der komplexierenden Substanz an einer ersten gewünschten Stelle; und
Erleichtern der Emission von Quecksilber an einer zweiten gewünschten Stelle,
wobei das Bayer-Verfahren die Schritte einschließt:
Aufschließen von Bauxit mit Ätzlösung;
Trennen von Flüssigkeit und Feststoff, wodurch ein Rückstand und eine Lauge bereitgestellt werden;
Ausfällen von Aluminiumhydroxid aus der Lauge; und
Kalzinieren des Aluminiumhydroxids, wodurch Aluminiumoxid bereitgestellt wird,
und wobei die Substanz, die Quecksilber komplexiert, zu dem Bayer-Verfahrensstrom vor dem Schritt des Ausfällens von Aluminiumhydroxid aus der Lauge zugegeben wird.

2. Verfahren nach Anspruch 1, wobei die Substanz, die Quecksilber komplexiert, zu dem Bayer-Verfahrensstrom vor dem Schritt des Aufschließens von Bauxit mit Ätzlösung zugegeben wird.

3. Verfahren nach Anspruch 1 oder Anspruch 2, wobei die Substanz, die Quecksilber komplexiert, in Form von Sulfidionen bereitgestellt wird.

4. Verfahren nach einem der vorstehenden Ansprüche, wobei der Schritt des Zugebens von Sulfidionen zu dem Bayer-Verfahrensstrom den Schritt einschließt:
Zugeben von ausreichend Sulfidionen, so dass der Verfahrensstrom freies Sulfid enthält.

5. Verfahren nach einem der vorstehenden Ansprüche, wobei die Sulfidionen in Form von Natriumhydrogensulfid bereitgestellt werden.

6. Verfahren nach Anspruch 3 oder 4, wobei die Sulfidionen in Form einer Organosulfidverbindung bereitgestellt werden.

7. Verfahren nach einem der vorstehenden Ansprüche, wobei der Schritt des Zulassens oder Bewirkens der Abreicherung an der Substanz, die Quecksilber komplexiert, mittels oxidation der Substanz, die Quecksilber komplexiert, durchgeführt wird.

8. Verfahren nach Anspruch 7 bei Abhängigkeit von Anspruch 3, wobei der Schritt des Zulassens oder Bewirkens der Abreicherung an der Substanz, die Quecksilber komplexiert, mittels Oxidation der Substanz, die Quecksilber komplexiert, den Schritt einschließt:
Zugeben eines Oxidationsmittels zum Verfahren, wodurch Sulfid zu Sulfat oxidiert wird.

9. Verfahren nach Anspruch 8, wobei das Oxidationsmittel in Form von Luft, Sauerstoff, Ozon, Wasserstoffperoxid, Hypochloritanion oder Permanganatanion bereitgestellt wird.

10. Verfahren nach einem der vorstehenden Ansprüche, wobei die Substanz, die Quecksilber komplexiert, nach dem Schritt des Trennens von Flüssigkeit und Feststoff zugegeben wird.

11. Verfahren nach Anspruch 10, wobei die Substanz, die Quecksilber komplexiert, in Form von Sulfidionen bereitgestellt wird und das Verfahren den weiteren Schritt umfasst:
Aufrechterhalten von ausreichender Sulfidkonzentration vor dem Schritt des Ausfällens von Aluminiumhydroxid, so dass nach dem Ausfällen von Aluminiumhydroxid freies Sulfid in der Bayer-Lauge vorliegt.

12. Verfahren nach einem der vorstehenden Ansprüche, das den Schritt einschließt:
Aufrechterhalten der Konzentration an freiem Sulfid in der Bayer-Lauge zwischen etwa 10 und 50 ppm vor dem Ausfällen von Aluminiumhydroxid.

13. Verfahren nach Anspruch 11 oder Anspruch 12 bei Abhängigkeit von Anspruch 8, wobei das Oxidationsmittel zu der Lauge aus dem Schritt des Ausfällens von Aluminiumhydroxid aus der Lauge zugegeben wird.

14. Verfahren nach Anspruch 11 oder Anspruch 12 bei Abhängigkeit von Anspruch 8, wobei das Oxidationsmittel vor dem Schritt des Aufschließens von Bauxit mit Ätzlösung zu der Lösung im Bayer-Verfahren zugegeben wird.

15. Verfahren nach einem der vorstehenden Ansprüche, das den Schritt einschließt:
Entfernen von Quecksilber aus dem Bayer-Verfahrensstrom mittels Verflüchtigung in nicht kondensierbaren Gasen aus Verdampfung und/oder Aufschließen.

16. Verfahren nach einem der Ansprüche 8 bis 15 bei Abhängigkeit von Anspruch 8, das den Schritt einschließt:
Zugeben des Oxidationsmittels zu dem Verfahren nach dem Schritt des Aufschließens von Bauxit mit Ätzlösung und vor dem Schritt des Trennens von Flüssigkeit und Feststoff.

17. Verfahren nach Anspruch 16, das den Schritt einschließt:
Mitfällen von Quecksilber mit den Feststoffen des Rückstands.

18. Verfahren nach einem der Ansprüche 3 bis 17, wobei das Bayer-Verfahren den Schritt einschließt:
Ausfällen von Oxalat aus der Lauge entweder nachfolgend auf das Ausfällen von Aluminiumhydroxid oder mitgefällt mit dem Aluminiumhydroxid;
und wobei das Verfahren den Schritt einschließt:
Zugeben von Sulfid vor dem Schritt des Ausfällens von Oxalat aus der Lauge, das ausreicht, um Sulfid in Lösung in der Lauge zu halten, um das Ausfällen von Quecksilber mit Feststoffen von Aluminiumhydroxid oder Oxalat zu verhindern.

19. Verfahren nach Anspruch 18 bei Abhängigkeit von Anspruch 8, wobei das Verfahren den Schritt umfasst:
Zugeben des Oxidationsmittels nach dem Schritt des Ausfällens von Oxalat, wodurch Sulfid oxidiert wird.

20. Verfahren nach einem der Ansprüche 8 bis 17, wobei das Bayer-Verfahren den Schritt einschließt:
Zugeben von Sulfid vor dem Ausfällen von Oxalat, das ausreicht, um Sulfid in Lösung zu halten, um das Ausfällen von Quecksilber mit Feststoffen von Aluminiumhydroxid oder Oxalat zu verhindern,
und wobei das Verfahren den Schritt einschließt:
Zugeben des Oxidationsmittels zu einem Nebenstrom der Lauge, wodurch Sulfid in dem Nebenstrom abgereichert wird; und
Leiten das an Sulfid abgereicherten Nebenstroms der Lauge zu einem Verfahrensschritt, bei dem Quecksilber entfernt werden kann.

## Revendications

1. Procédé destiné à maîtriser les émissions de mercure provenant de solutions contenant du mercure issues d'un procédé Bayer comprenant les étapes consistant à :
- ajouter au courant de procédé une substance complexant le mercure,
- permettre ou entraîner la déplétion en substance complexante à un premier endroit souhaité ; et
- faciliter l'émission de mercure à un deuxième endroit souhaité,
dans lequel le procédé Bayer comprend les étapes consistant à :
- digérer la bauxite à l'aide d'une solution caustique ;
- séparer le mélange liquide/matières solides pour fournir un résidu et une liqueur ;
- précipiter l'hydroxyde d'aluminium de la liqueur ; et calciner l'hydroxyde d'aluminium pour produire de l'alumine,
et dans lequel la substance complexant le mercure est ajoutée au courant du procédé Bayer avant l'étape de précipitation de l'hydroxyde d'aluminium de la liqueur.

2. Procédé selon la revendication 1, dans lequel la substance complexant le mercure est ajoutée au courant du procédé Bayer avant l'étape consistant à digérer la bauxite avec une solution caustique.

3. Procédé selon l'une quelconque des revendications 1 ou 2, dans lequel la substance complexant le mercure est fournie sous la forme d'ions sulfure.

4. Procédé selon l'une quelconque des revendications précédentes, dans lequel l'étape consistant à ajouter les ions sulfure au courant du procédé Bayer comprend l'étape consistant à :
- ajouter suffisamment d'ions sulfure pour que le courant de procédé contienne du sulfure libre.

5. Procédé selon l'une quelconque des revendications précédentes, dans lequel les ions sulfure sont fournis sous la forme d'hydrogénosulfure de sodium.

6. Procédé selon l'une quelconque des revendications 3 ou 4, dans lequel les ions sulfure sont fournis sous la forme d'un composé organosulfure.

7. Procédé selon l'une quelconque des revendications précédentes, dans lequel l'étape consistant à permettre ou entraîner la déplétion en substance complexant le mercure est réalisée par oxydation de la substance complexant le mercure.

8. Procédé selon la revendication 7 lorsque celle-ci dépend de la revendication 3, dans lequel l'étape consistant à permettre ou entraîner la déplétion en substance complexant le mercure par oxydation de la substance complexant le mercure comprend l'étape consistant à :
- ajouter au procédé un oxydant destiné à oxyder le sulfure pour former un sulfate.

9. Procédé selon la revendication 8, dans lequel l'oxydant est fourni sous la forme d'air, d'oxygène, d'ozone, de peroxyde d'hydrogène, d'anions hypochlorite ou permanganate.

10. Procédé selon l'une quelconque des revendications précédentes, dans lequel la substance complexant le mercure est ajoutée après l'étape consistant à séparer le mélange liquide/matières solides.

11. Procédé selon la revendication 10, dans lequel la substance complexant le mercure est fournie sous la forme d'ions sulfure et le procédé comprend l'étape supplémentaire consistant à :
- maintenir une concentration en sulfure suffisante avant l'étape consistant à précipiter l'hydroxyde d'aluminium pour qu'il existe du sulfure libre dans la liqueur du procédé Bayer après l'étape de précipitation de l'hydroxyde d'aluminium.

12. Procédé selon l'une quelconque des revendications du procédé, comprenant l'étape consistant à :
- maintenir la concentration en sulfure libre dans la liqueur du procédé Bayer entre 10 et 50 ppm avant l'étape de précipitation de l'hydroxyde d'aluminium.

13. Procédé selon l'une quelconque des revendications 11 ou 12 lorsque celles-ci dépendent de la revendication 8,
dans lequel l'oxydant est ajouté à la liqueur issue de l'étape de précipitation de l'hydroxyde d'aluminium de la liqueur.

14. Procédé selon l'une quelconque des revendications 11 ou 12 lorsque celles-ci dépendent de la revendication 8,
dans lequel l'oxydant est ajouté à la solution du procédé Bayer avant l'étape de digestion de la bauxite avec une solution caustique.

15. Procédé selon l'une quelconque des revendications précédentes, comprenant l'étape consistant à :
- éliminer le mercure du courant du procédé Bayer par volatilisation dans les gaz non condensables issus de l'évaporation et/ou de la digestion.

16. Procédé selon l'une quelconque des revendications 8 à 15 lorsque celles-ci dépendent de la revendication 8, comprenant l'étape consistant à :
- ajouter l'oxydant au procédé après l'étape consistant à digérer la bauxite avec une solution caustique et avant l'étape consistant à séparer le mélange liquide/matières solides.

17. Procédé selon la revendication 16, comprenant l'étape consistant à :
- co-précipiter le mercure avec des matières solides résiduelles.

18. Procédé selon l'une quelconque des revendications 3 à 17, dans lequel le procédé Bayer comprend l'étape consistant à :
- précipiter l'oxalate de la liqueur soit après la précipitation de l'hydroxyde d'aluminium, soit par co-précipitation avec l'hydroxyde d'aluminium ;
et dans lequel le procédé comprend l'étape consistant à :
- ajouter le sulfure avant l'étape consistant à précipiter l'oxalate de la liqueur dans une quantité suffisante pour maintenir le sulfure en solution dans la liqueur pour inhiber la précipitation du mercure conjointement avec l'hydroxyde d'aluminium ou les matières solides oxalate.

19. Procédé selon la revendication 18 lorsque celle-ci dépend de la revendication 8, dans lequel le procédé comprend l'étape consistant à :
- ajouter l'oxydant après l'étape consistant à précipiter l'oxalate pour oxyder le sulfure.

20. Procédé selon l'une quelconque des revendications 8 à 17, dans lequel le procédé Bayer comprend l'étape consistant à :
- ajouter le sulfure avant la précipitation d'oxalate dans une quantité suffisante afin de maintenir du sulfure en solution pour inhiber la précipitation du mercure conjointement avec l'hydroxyde d'aluminium ou les matières solides oxalate,
et dans lequel le procédé comprend l'étape consistant à :
- ajouter l'oxydant à un courant secondaire de liqueur afin de provoquer la dépletion en sulfure dans ledit courant secondaire ; et
- diriger le courant secondaire de liqueur appauvrie en sulfure vers une étape de procédé dans laquelle le mercure peut être éliminé.
